# EUROPÄISCHE PATENTSCHRIFT

(11) **EP 3 339 107 B1**
(45) Veröffentlichungstag und Bekanntmachung des Hinweises auf die Patenterteilung: **18.11.2020**
(21) Anmeldenummer: 17208039.2
(22) Anmeldetag: 18.12.2017
(51) Int. Cl.: B60R 19/56

(54) **HECKUNTERFAHRSCHUTZ FÜR EIN FAHRZEUG**
REAR UNDERRIDE GUARD FOR A VEHICLE
PROTECTION CONTRE L'ENCASTREMENT À L'ARRIÈRE POUR UN VÉHICULE

(30) Priorität: 23.12.2016 DE 102016015501
(43) Veröffentlichungstag der Anmeldung: 27.06.2018
(73) Patentinhaber: MAN Truck & Bus SE, 80995 München (DE)
(72) Erfinder: Wilke, Florian, 81549 München (DE); Bogicevic, Aleksandar, 81247 München (DE); Langhammer, Mike, 80992 München (DE); Marx, Stefan, 82290 Landsberied (DE)
(74) Vertreter: v. Bezold & Partner Patentanwälte - PartG mbB

(56) Entgegenhaltungen:
- WO-A1-2007/080694
- WO-A2-2014/125400
- DE-A1- 10 330 726
- DE-U1- 20 016 473
- DE-U1-202007 015 877
- JP-A- 2006 088 905

## Beschreibung

Die Erfindung betrifft einen Unterfahrschutz zur Anordnung an ein Heck eines Fahrzeugs, vorzugsweise eines Kraftfahrzeugs, z. B. eines Nutzfahrzeugs, insbesondere eines Lastkraftwagens oder eines Omnibusses, und/oder eines Anhängers hierfür.

Zum Stand der Technik kann zunächst auf die JP 2006 088905 A, die einen Unterfahrerschutz gemäß dem Oberbegriff des Anspruchs 1 offenbart, WO 2014/125400 A2 und DE 200 16 473 US verwiesen werden.

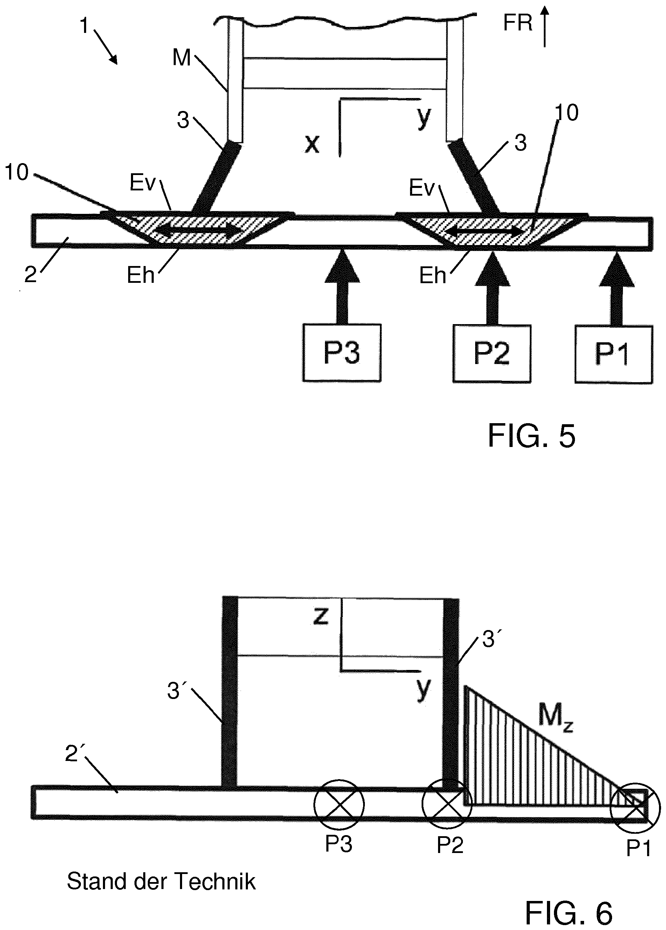

Im Stand der Technik sind Unterfahrschutzsysteme für das Heck von Nutzfahrzeugen in unterschiedlichster Ausführungsform bekannt. Heck-Unterfahrschutzsysteme sollen im Allgemeinen verhindern, dass bei einem Verkehrsunfall kleinere Fahrzeuge (z. B. Personenkraftwagen, Zweiräder etc.) das Nutzfahrzeug von hinten unterfahren, wodurch für die Personen der kleineren Fahrzeuge eine große Gefahr besteht, verletzt oder sogar getötet zu werden. Heck-Unterfahrschutzsysteme müssen gesetzlichen Anforderungen genügen (z. B. ECE R58). Die Figur 6 zeigt eine Ansicht von hinten eines aus der Praxis bekannten Heck-Unterfahrschutzes, mit einem Biegemomentenverlauf Mz, der aus einer horizontalen Belastung von hinten (z. B. Aufprall eines anderen Kraftfahrzeugs) am Prüfpunkt P1 resultiert. Der Heck-Unterfahrschutz umfasst einen Querträger 2'und zwei Tragarme 3' zum Tragen des Querträgers 2' und zur Montage an das Nutzfahrzeug. Nachteilig daran ist insbesondere die hohe Biegemomentenbelastung Mz am Übergang zwischen Querträger 2' und Tragarm 3'.

Eine Aufgabe der Erfindung ist es, eine gleichmäßigere und/oder verbesserte Auslastung eines Unterfahrschutz-Querträgers zu schaffen, insbesondere hinsichtlich gesetzlich geforderter Prüfkräfte an gesetzlich geforderten Prüfpunkten (z. B. ECE R58).

Diese Aufgabe wird mit den Merkmalen des Anspruchs 1 gelöst. Vorteilhafte Weiterbildungen der Erfindung können den Unteransprüchen und der folgenden Beschreibung bevorzugter Ausführungsformen der Erfindung entnommen werden.

Die Erfindung betrifft einen Unterfahrschutz zur Anordnung an ein Heck eines Fahrzeugs, vorzugsweise Kraftfahrzeugs, z. B. eines Nutzfahrzeugs, wie etwa einen Lastkraftwagen oder einen Omnibus, und/oder eines Anhängers hierfür. Der Unterfahrschutz umfasst einen Querträger und zwei Tragarme zum Tragen des Querträgers und zur Montage an einer Montagekonstruktion des Fahrzeugs. Die Montagekonstruktion kann zweckmäßig ein Fahrzeugrahmen sein, insbesondere eine Längsträger- und/oder Querträgerkonstruktion.

Der Unterfahrschutz zeichnet sich insbesondere dadurch aus, dass er zwei Verbindungseinrichtungen zur vorzugsweise lösbaren Montage des Querträgers an die Tragarme umfasst.

Die Verbindungseinrichtungen dienen als Verstärkungsteile zur abschnittsweisen mechanischen Verstärkung des Querträgers, insbesondere durch Vergrößerung, z. B. zumindest Doppelung, der Materialdicke im Übergangsbereich zwischen dem Querträger und den Tragarmen. Ergänzend dienen die Verbindungseinrichtungen zur Verstellbarkeit (z. B Längsverstellbarkeit) der Tragarme entlang des Querträgers.

Es ist darüber hinaus möglich, dass die zwei Tragarme z. B. nach seitlich außen und somit vorzugsweise in Längsrichtung des Querträgers seitlich ausgestellt sind, vorzugsweise so, dass der Abstand der Tragarme am Querträger größer ist als der Abstand der Tragarme an der Montagekonstruktion.

x kennzeichnet zweckmäßig die Längsrichtung-/achse des Fahrzeugs. y kennzeichnet zweckmäßig die Breitenrichtung-/achse des Fahrzeugs. z kennzeichnet zweckmäßig die Höhenrichtung-/achse des Fahrzeugs.

Das Ausstellen der Tragarme erfolgt somit zweckmäßig in einem Winkel zur xz-Ebene.

Durch die Verbindungseinrichtungen und optional das Ausstellen der Tragarme nach seitlich außen kann ein reduziertes Biegemoment Mz um die z-Achse im Übergangsbereich zwischen Querträger und Tragarm erzielt werden, insbesondere infolge einer Prüfkraft am Prüfpunkt P1 gemäß ECE R58.

Dadurch kann eine gleichmäßige und/oder verbesserte Auslastung des Querträgers ermöglicht werden, insbesondere hinsichtlich gesetzlich geforderter Prüfkräfte an gesetzlich geforderten Prüfpunkten (z. B. P1 und P3 nach ECE R58).

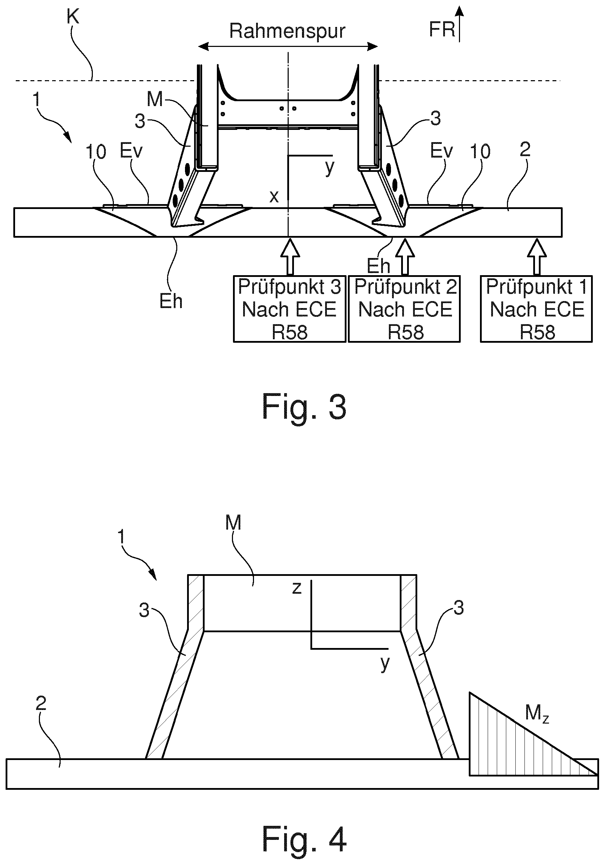

Im Allgemeinen ergibt sich durch das Ausstellen der Tragarme nach seitlich außen insbesondere eine erhöhte Belastbarkeit des Unterfahrschutzes am Prüfpunkt P1 und eine verringerte Belastbarkeit am Prüfpunkt P3 (siehe z. B. Figuren 3 und 5).

Es ist möglich, dass die Tragarme relativ zum Fahrzeugs nach hinten ausgestellt sind.

Ebenfalls ist es möglich, dass sich die Tragarme von der Montagekonstruktion nach unten erstrecken.

Die Tragarme erstrecken sich zwischen dem Querträger und der Montageeinrichtung vorzugsweise schräg.

Gemäß der Erfindung weist die jeweilige Verbindungseinrichtung eine Vorderseite und eine Hinterseite auf Es ist möglich, dass eine Längserstreckung und Materialstärke der Hinterseite zumindest abschnittsweise kleiner ist als eine Längserstreckung und Materialstärke der Vorderseite. Es ist möglich, dass die jeweilige Verbindungseinrichtung sich nach hinten verjüngt und/oder an ihrer Hinterseite schmaler ist als an ihrer Vorderseite (z. B. in Bezug auf ihre Wanddicke und/oder Längserstreckung). Dadurch kann zweckmäßig eine belastungsgerechte oder belastungsangepasste Form oder Kontur der Verbindungseinrichtungen erzeugt werden. Die Belastung entspricht üblicherweise einem im Wesentlichen horizontalen Aufprall von hinten.

Die Verkleinerung, Verjüngung und/oder Verschmälerung kann insbesondere durch eine Materialreduzierung und/oder Materialaussparung der Verbindungseinrichtungen erzielt werden. Sie kann z. B. stufenweise oder kontinuierlich erfolgen.

Die Innenform der Verbindungseinrichtungen ist vorzugsweise an die Außenform des Querträgers angepasst, so dass ein Aufnahmeraum zur abschnittsweisen Aufnahme des Querträgers durch die Verbindungseinrichtungen gebildet werden kann. Die Innenform der Verbindungseinrichtungen ist vorzugsweise an die Außenform des Querträgers angepasst, so dass ein Aufnahmeraum zur abschnittsweisen Aufnahme des Querträgers durch die Verbindungseinrichtungen gebildet werden kann.

Die jeweilige Verbindungseinrichtung kann den Querträger in Umfangsrichtung des Querträgers vorzugsweise über zumindest 180° oder sogar im Wesentlichen vollständig einmanteln. Die jeweilige Verbindungseinrichtung umfasst zwei Schalenteile.

Die Verbindungseinrichtungen dienen ferner zur vorzugsweise lösbaren Montage an den Querträger.

Die jeweilige Verbindungseinrichtung kann einstückig oder mehrstückig ausgeführt sein.

Zu erwähnen ist noch, dass die Verbindungseinrichtungen z. B. unlösbar (z. B. mittels einer Schweißverbindung) oder lösbar (z. B. mittels einer Schraubverbindung) an die Tragarme montiert sein können.

Die Erfindung ist nicht auf einen Unterfahrschutz beschränkt, sondern umfasst auch ein Fahrzeug, insbesondere ein Nutzfahrzeug, wie etwa einen Lastkraftwagen oder einen Omnibus, und/oder einen Anhänger hierfür, mit einem Unterfahrschutz wie hierin offenbart.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Darstellung eines Unterfahrschutzes gemäß einer Ausführungsform der Erfindung von hinten,
- Figur 2: zeigt eine Darstellung des Unterfahrschutzes der Figur 1 von der Seite,
- Figur 3: zeigt eine Darstellung des Unterfahrschutzes der Figuren 1 und 2 von oben,
- Figur 4: zeigt eine schematische Darstellung eines Biegemomentenverlaufs Mz an einem Unterfahrschutz gemäß einer Ausführungsform der Erfindung,
- Figur 5: zeigt eine schematische Darstellung eines Unterfahrschutzes gemäß einer anderen Ausführungsform der Erfindung von oben, und
- Figur 6: zeigt einen Biegemomentenverlauf Mz an einem Unterfahrschutz gemäß Stand der Technik.

Die unter Bezugnahme auf die Figuren beschriebenen Ausführungsformen stimmen teilweise überein, so dass ähnliche oder identische Teile mit den gleichen Bezugszeichen versehen sind und zu deren Erläuterung auch auf die Beschreibung der anderen Ausführungsformen verwiesen wird, um Wiederholungen zu vermeiden.

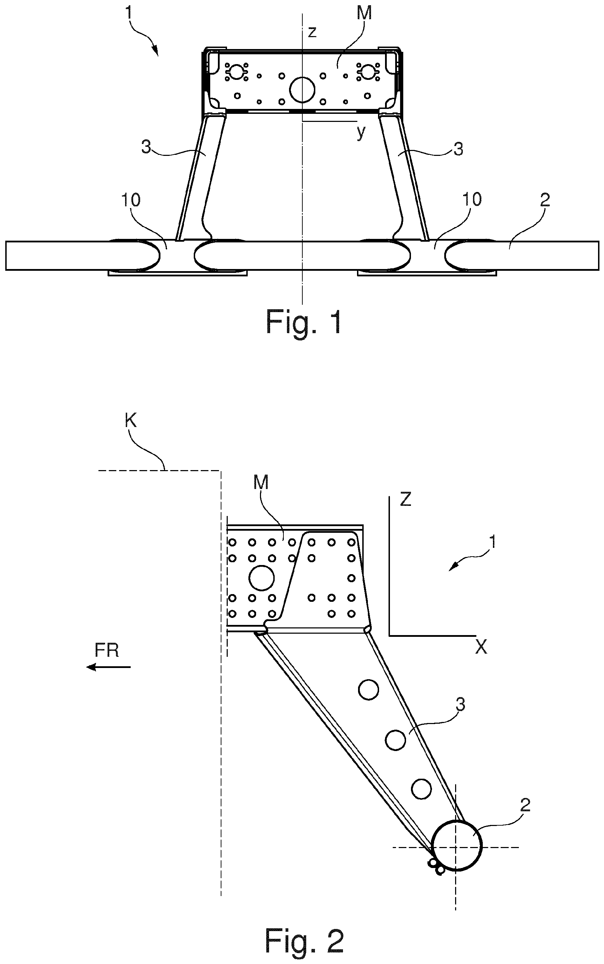

Figur 1 zeigt eine Ansicht von hinten eines Unterfahrschutzes 1 gemäß einer Ausführungsform der Erfindung. Der Unterfahrschutz 1 dient zur Anordnung an ein Heck eines in den Figuren 2 und 3 stark schematisch dargestellten Fahrzeugs K, vorzugsweise eines Kraftfahrzeugs K, insbesondere eines Lastkraftwagens oder Omnibusses.

Der Unterfahrschutz 1 wird nachfolgend unter gemeinsamer Bezugnahme auf die Figuren 1 bis 3 beschrieben, wobei Figur 2 ein Seitenansicht und Figur 3 eine Ansicht von oben des Unterfahrschutzes 1 zeigt. Die Buchstaben x, y, z symbolisieren wie üblich ein Koordinatensystem, wobei x die Längsrichtung-/achse des Kraftfahrzeugs K kennzeichnet, y die Breitenrichtung-/achse des Kraftfahrzeugs K und somit die Längsrichtung-/achse des Querträgers 2 kennzeichnet, und z die Höhenrichtung-/achse des Kraftfahrzeugs K kennzeichnet. Pfeil FR kennzeichnet die Vorwärtsfahrtrichtung des Kraftfahrzeugs K.

Der Unterfahrschutz 1 soll insbesondere verhindern, dass bei einem Verkehrsunfall kleinere Fahrzeuge (z. B. Personenkraftwagen, Zweiräder etc.) das Kraftfahrzeug K von hinten unterfahren, wodurch für die Personen der kleineren Fahrzeuge eine große Gefahr besteht, schwer verletzt oder sogar getötet zu werden. Der Unterfahrschutz 1 soll insbesondere gesetzlichen Anforderungen genügen, z. B. in Bezug auf ECE R58.

Der Unterfahrschutz 1 umfasst einen Querträger 2 und zwei Tragarme 3. Die zwei Tragarme 3 dienen zum Tragen des Querträgers 2 und zur Montage an einer Montagekonstruktion M des Kraftfahrzeugs K. Die Montagekonstruktion M ist vorzugsweise ein Fahrzeugrahmen, z. B. eine Längsträger- oder Querträgerkonstruktion.

Die zwei Tragarme 3 sind vorzugsweise nach seitlich außen (zweckmäßig in einem Winkel zur xz-Ebene und/oder in y-Richtung) ausgestellt, insbesondere so, dass der Abstand der Tragarme 3 unten am Querträger 2 größer ist als der Abstand der Tragarme 3 oben an der Montagekonstruktion M.

Die Tragarme 3 sind nicht nur nach seitlich außen ausgestellt, sondern auch nach hinten (zweckmäßig in einem Winkel zur yz-Ebene und/oder in x-Richtung).

Die Tragarme 3 erstrecken sich zwischen der Montageeinrichtung M und dem Querträger 2 vorzugsweise im Wesentlichen linear-schräg.

Der Unterfahrschutz 1 umfasst darüber hinaus zwei Verbindungseinrichtungen 10. Die Verbindungseinrichtungen 10 dienen zur zweckmäßig lösbaren Montage des Querträgers 2 an die Tragarme 3. Die Verbindungseinrichtungen 10 sind als Verstärkungsteile zur abschnittsweisen mechanischen Verstärkung des Querträgers 2 ausgeführt und alternativ oder ergänzend zur Verstellbarkeit in Längsrichtung des Querträgers 2. Die Verbindungseinrichtungen 10 ermöglichen somit eine Verstellung der Tragarme 3 entlang der y-Achse und somit in Längsrichtung des Querträgers 2, so dass der Unterfahrschutz 1 bei Kraftfahrzeugen K mit unterschiedlichen Rahmenspuren verwendet werden kann. Alternativ oder ergänzend können dadurch Rahmenspurtoleranzen und/oder zusätzliche Befestigungselemente für Anbauten (z. B. Aufbauten, Kranplatten etc.) ausgeglichen werden.

Die Verbindungseinrichtungen 10, insbesondere deren Kontur, sind geometrisch so ausgeformt, dass der Querträger 2 gezielt verstärkt ist, vor allem in den für gesetzlich geforderten Prüfkräften relevanten Bereichen / Prüfpunkten (z. B. ECE R58).

Die jeweilige Verbindungseinrichtung 10 umfasst eine Vorderseite Ev und eine Hinterseite Eh, wobei eine Längserstreckung (oder alternativ oder ergänzend eine Materialstärke) der Hinterseite Eh zumindest abschnittsweise kleiner ist als eine Längserstreckung (oder alternativ oder ergänzend eine Materialstärke) der Vorderseite Ev. Die jeweilige Verbindungseinrichtung 10 verjüngt sich insbesondere nach hinten und ist an ihrer Hinterseite Eh schmaler als an ihrer Vorderseite Ev. Im gezeigten Ausführungsbeispiel erfolgt die Verjüngung und/oder Verschmälerung in Bezug auf die Längserstreckung der Verbindungseinrichtung 10, wobei ebenfalls eine Verjüngung und/oder Verschmälerung in Bezug auf die Wanddicke der Verbindungseinrichtungen 10 erfolgen kann. Die Verbindungseinrichtungen 10 können somit eine Aufprall-belastungsangepasste Form oder Kontur aufweisen. Der Aufprall erfolgt üblicherweise im Wesentlichen horizontal von hinten.

Die Innenform der Verbindungseinrichtungen 10 ist an die Außenform des Querträgers 2 angepasst, so dass dadurch ein Aufnahmeraum zur abschnittsweisen Aufnahme des Querträgers 2 gebildet wird. Im gezeigten Ausführungsbeispiel ist die jeweilige Verbindungseinrichtung 10 als ein belastungsangepasstes Rund-Hohlprofil ausgeführt, wobei die zwei erfinderische belastungsangepasste Schalenteile zum Einsatz kommen.

Im gezeigten Ausführungsbeispiel mantelt die jeweilige Verbindungseinrichtung 10 den Querträger 2 in seiner Umfangsrichtung über im Wesentlichen den gesamten Außenumfang ein.

In Figur 3 sind zudem Prüfpunkte P1, P2 und P3 nach ECE R58 gezeigt.

Figur 4 zeigt einen Biegemomentenverlauf Mz an einem Unterfahrschutz 1, der im Wesentlichen dem in den Figuren 1 bis 3 gezeigten Unterfahrschutz 1 entspricht, allerdings ohne die Verbindungseinrichtungen 10, die zu einer weiteren Optimierung des Biegemomentenverlaufs Mz führen.

Durch das Ausstellen der Tragarme 2 nach seitlich außen kann ein reduziertes Biegemoment Mz um die z-Achse im Übergangsbereich zwischen Querträger 2 und Tragarm 3 erzielt werden, insbesondere infolge einer Prüfkraft am Prüfpunkt P1 gemäß ECE R58.

Dadurch kann eine gleichmäßige, verbesserte Auslastung des Querträgers 2 ermöglicht werden, insbesondere hinsichtlich gesetzlich geforderter Prüfkräfte an gesetzlich geforderten Prüfpunkten P1 und P3 nach ECE R58.

Durch das Ausstellen der Tragarme 3 nach seitlich außen und/oder die verstärkenden Verbindungseinrichtungen 10 ergibt sich insbesondere eine erhöhte Belastbarkeit des Unterfahrschutzes 1 gegenüber einer Prüfkraft am Prüfpunkt P1 und eine verringerte Belastbarkeit am Prüfpunkt P3.

Figur 5 zeigt eine schematische Darstellung eines Unterfahrschutzes 1 gemäß einer Ausführungsform der Erfindung, wobei der Unterfahrschutz 1 im Wesentlichen dem Unterfahrschutz 1 der Figuren 1 bis 3 entspricht. Die Doppelpfeile kennzeichnen die Verstellbarkeit der Verbindungseinrichtungen 10 und somit der Tragarme 3 entlang des Querträgers 2.

### Bezugszeichenliste

- 1: Unterfahrschutz
- 2: Querträger
- 3: Tragarme
- 10: Verbindungseinrichtungen
- M: Montageeinrichtung
- P1: Prüfpunkt
- P2: Prüfpunkt
- P3: Prüfpunkt
- Eh: Hinterseite
- Ev: Vorderseite
- x: x-Achse/Richtung
- y: y-Achse/Richtung
- z: z-Achse/Richtung
- K: Fahrzeug, vorzugsweise Kraftfahrzeug und/oder Anhänger hierfür
- FR: Vorwärtsfahrtrichtung des Fahrzeugs

## Patentansprüche

1. Unterfahrschutz (1) zur Anordnung an ein Heck eines Fahrzeugs (K), vorzugsweise eines Kraftfahrzeugs (K), und/oder eines Anhängers hierfür, mit einem Querträger (2) und zwei Tragarmen (3) zum Tragen des Querträgers (2) und zur Montage an einer Montagekonstruktion (M) des Fahrzeugs (K), wobei der Unterfahrschutz (1) zwei Verbindungseinrichtungen (10) zur Montage des Querträgers (2) an die Tragarme (3) umfasst und die Verbindungseinrichtungen (10) als Verstärkungsteile zur abschnittsweisen Verstärkung des Querträgers (2) dienen und die Verbindungseinrichtungen (10) zur Verstellbarkeit entlang des Querträgers (2) ausgeführt sind, **dadurch gekennzeichnet, dass** die jeweilige Verbindungseinrichtung (10) zwei Schalenteile umfasst und wobei die jeweilige Verbindungseinrichtung (10) eine Vorderseite (Ev) und eine Hinterseite (Eh) aufweist und eine Materialstärke der Hinterseite (Eh) zumindest abschnittsweise kleiner ist als eine Materialstärke der Vorderseite (Ev).

2. Unterfahrschutz (1) nach Anspruch 1, **dadurch gekennzeichnet, dass** die zwei Tragarme (3) nach seitlich außen ausgestellt sind, vorzugsweise so dass der Abstand der Tragarme (3) am Querträger (2) größer ist als der Abstand der Tragarme (3) an der Montagekonstruktion (M).

3. Unterfahrschutz (1) nach Anspruch 1 oder 2, **dadurch gekennzeichnet, dass** die Tragarme (3) relativ zum Fahrzeug (K) nach hinten ausgestellt sind.

4. Unterfahrschutz (1) nach einem der vorhergehenden Ansprüche, **dadurch gekennzeichnet, dass** die Tragarme (3) sich von der Montagekonstruktion (M) nach unten (z) erstrecken.

5. Unterfahrschutz (1) nach einem der vorhergehenden Ansprüche, **dadurch gekennzeichnet, dass** die Tragarme (3) sich zwischen dem Querträger (2) und der Montageeinrichtung (M) schräg erstrecken.

6. Unterfahrschutz (1) nach einem der vorhergehenden Ansprüche, **dadurch gekennzeichnet, dass** eine Längserstreckung der Hinterseite (Eh) zumindest abschnittsweise kleiner ist als eine Längserstreckung der Vorderseite (Ev).

7. Unterfahrschutz (1) nach einem der vorhergehenden Ansprüche, **dadurch gekennzeichnet, dass** die jeweilige Verbindungseinrichtung (10) sich nach hinten verjüngt und/oder an ihrem hinteren Ende (Eh) schmaler ist als an ihrem vorderen Ende (Ev).

8. Unterfahrschutz (1) nach einem der vorhergehenden Ansprüche, **dadurch gekennzeichnet, dass** die Innenform der Verbindungseinrichtungen (10) an die Außenform des Querträgers (2) angepasst ist, so dass ein Aufnahmeraum zur abschnittsweisen Aufnahme des Querträgers (2) gebildet wird.

9. Unterfahrschutz (1) nach einem der vorhergehenden Ansprüche, **dadurch gekennzeichnet, dass** die jeweilige Verbindungseinrichtung (10) den Querträger (2) in seiner Umfangsrichtung im Wesentlichen vollständig einmantelt.

10. Unterfahrschutz (1) nach einem der vorhergehenden Ansprüche, **dadurch gekennzeichnet, dass** die Verbindungseinrichtungen (10) zur lösbaren Montage an den Querträger (2) ausgeführt sind.

11. Unterfahrschutz (1) nach einem der vorhergehenden Ansprüche, **dadurch gekennzeichnet, dass** die Verbindungseinrichtungen (10) einstückig oder mehrstückig ausgeführt sind.

12. Fahrzeug (K), vorzugsweise Kraftfahrzeug (K), insbesondere Nutzfahrzeug, und/oder Anhänger hierfür, mit einem Unterfahrschutz (1) nach einem der vorhergehenden Ansprüche.

## Claims

1. Underrun protection system (1) for arranging on a rear of a vehicle (K), preferably a motor vehicle (K), and/or a trailer therefor, comprising a crossmember (2) and two support arms (3) for supporting the crossmember (2) and for mounting on a mounting structure (M) of the vehicle (K), the underrun protection system (1) comprising two connecting devices (10) for mounting the crossmember (2) on the support arms (3) and the connecting devices (10) serving as reinforcing parts for the partial reinforcement of the crossmember (2) and the connecting devices (10) being designed for adjustability along the crossmember (2), **characterized in that** the respective connecting device (10) comprises two shell parts, and the respective connecting device (10) having a front face (Ev) and a rear face (Eh), and a material thickness of the rear face (Eh) being at least partially smaller than a material thickness of the front face (Ev).

2. Underrun protection system (1) according to Claim 1, **characterized in that** the two support arms (3) are extended outwardly to the side, preferably such that the spacing of the support arms (3) on the crossmember (2) is greater than the spacing of the support arms (3) on the mounting structure (M).

3. Underrun protection system (1) according to Claim 1 or 2, **characterized in that** the support arms (3) are extended to the rear relative to the vehicle (K).

4. Underrun protection system (1) according to one of the preceding claims, **characterized in that** the support arms (3) extend downwardly (z) from the mounting structure (M).

5. Underrun protection system (1) according to one of the preceding claims, **characterized in that** the support arms (3) extend obliquely between the crossmember (2) and the mounting device (M).

6. Underrun protection system (1) according to one of the preceding claims, **characterized in that** a longitudinal extent of the rear face (Eh) is at least partially smaller than a longitudinal extent of the front face (Ev).

7. Underrun protection system (1) according to one of the preceding claims, **characterized in that** the respective connecting device (10) tapers to the rear and/or at its rear end (Eh) is narrower than at its front end (Ev).

8. Underrun protection system (1) according to one of the preceding claims, **characterized in that** the internal shape of the connecting devices (10) is adapted to the external shape of the crossmember (2) such that a receiver space is formed for partially receiving the crossmember (2).

9. Underrun protection system (1) according to one of the preceding claims, **characterized in that** the respective connecting device (10) encases the crossmember (2) in its peripheral direction substantially entirely.

10. Underrun protection system (1) according to one of the preceding claims, **characterized in that** the connecting devices (10) are designed for the releasable mounting on the crossmember (2).

11. Underrun protection system (1) according to one of the preceding claims, **characterized in that** the connecting devices (10) are of integral or multipart design.

12. Vehicle (K), preferably a motor vehicle (K), in particular a utility vehicle, and/or a trailer therefor, comprising an underrun protection system (1) according to one of the preceding claims.

## Revendications

1. Dispositif anti-encastrement (1) prévu pour être disposé à l'arrière d'un véhicule (K), de préférence d'un véhicule automobile (K), et/ou d'une remorque pour celui-ci, comprenant une traverse (2) et deux bras porteurs (3) pour porter la traverse (2) et pour le montage sur une construction de montage (M) du véhicule (K), le dispositif anti-encastrement (1) comprenant deux systèmes de liaison (10) pour le montage de la traverse (2) sur les bras porteurs (3) et les systèmes de liaison (10) servant de pièces de renforcement pour le renforcement partiel de la traverse (2) et les systèmes de liaison (10) étant réalisés pour pouvoir être déplacés le long de la traverse (2), **caractérisé en ce que** le système de liaison respectif (10) comprend deux parties de coque et le système de liaison respectif (10) présentant un côté avant (Ev) et un côté arrière (Eh) et une épaisseur de matériau du côté arrière (Eh) étant au moins en partie inférieure à une épaisseur de matériau du côté avant (Ev).

2. Dispositif anti-encastrement (1) selon la revendication 1, **caractérisé en ce que** les deux bras porteurs (3) sont exposés latéralement vers l'extérieur, de préférence de telle sorte que la distance entre les bras porteurs (3) au niveau de la traverse (2) soit supérieure à la distance entre les bras porteurs (3) au niveau de la construction de montage (M).

3. Dispositif anti-encastrement (1) selon la revendication 1 ou 2, **caractérisé en ce que** les bras porteurs (3) sont exposés vers l'arrière par rapport au véhicule (K).

4. Dispositif anti-encastrement (1) selon l'une quelconque des revendications précédentes, **caractérisé en ce que** les bras porteurs (3) s'étendent vers le bas (z) depuis la construction de montage (M).

5. Dispositif anti-encastrement (1) selon l'une quelconque des revendications précédentes, **caractérisé en ce que** les bras porteurs (3) s'étendent obliquement entre la traverse (2) et le système de montage (M).

6. Dispositif anti-encastrement (1) selon l'une quelconque des revendications précédentes, **caractérisé en ce qu'**une étendue longitudinale du côté arrière (Eh) est au moins en partie inférieure à une étendue longitudinale du côté avant (Ev).

7. Dispositif anti-encastrement (1) selon l'une quelconque des revendications précédentes, **caractérisé en ce que** le système de liaison respectif (10) se rétrécit vers l'arrière et/ou est plus étroit à son extrémité arrière (Eh) qu'à son extrémité avant (Ev).

8. Dispositif anti-encastrement (1) selon l'une quelconque des revendications précédentes, **caractérisé en ce que** la forme intérieure des systèmes de liaison (10) est adaptée à la forme extérieure de la traverse (2) de telle sorte qu'un espace de réception soit formé pour recevoir en partie la traverse (2).

9. Dispositif anti-encastrement (1) selon l'une quelconque des revendications précédentes, **caractérisé en ce que** le système de liaison respectif (10) enveloppe essentiellement complètement la traverse (2) dans sa direction périphérique.

10. Dispositif anti-encastrement (1) selon l'une quelconque des revendications précédentes, **caractérisé en ce que** les systèmes de liaison (10) sont réalisés en vue d'un montage amovible sur la traverse (2).

11. Dispositif anti-encastrement (1) selon l'une quelconque des revendications précédentes, **caractérisé en ce que** les systèmes de liaison (10) sont réalisés d'une seule pièce ou en plusieurs parties.

12. Véhicule (K), de préférence véhicule automobile (K), en particulier véhicule utilitaire, et/ou remorque pour celui-ci, comprenant un dispositif anti-encastrement (1) selon l'une quelconque des revendications précédentes.
